# EUROPEAN PATENT APPLICATION

(11) **EP 4 749 381 A1**
(43) Date of publication of application: **27.05.2026**
(21) Application number: 24306943.2
(22) Date of filing: 21.11.2024
(51) Int. Cl.: G05B 9/03, G05B 19/042, G05B 19/05

(54) **A METHOD FOR MAINTENANCE WORK OF A SAFETY FUNCTION FOR AN INDUSTRIAL SYSTEM AND A PROGRAMMABLE LOGIC DEVICE**

(71) Applicant: Schneider Electric Industries SAS, 92500 Rueil-Malmaison (FR)
(72) Inventor: LITTERST, Jürgen, 77652 Offenburg (DE)
(74) Representative: Manitz Finsterwald Patent- und Rechtsanwaltspartnerschaft mbB

(57) **Abstract**

A method for maintenance work of a first safety function (101) implemented in a first channel (100) in a first programmable logic device(10, 20), PLDev, for an industrial system, wherein a second safety function (102) is implemented in the first channel (100), and the first safety function (101) is applied for a first safety purpose of the industrial system and the second safety function (102) is applied for a second safety purpose of the industrial system, the method comprising: providing an auxiliary channel (100a) in a second PLDev, wherein the auxiliary channel (100a) is capable of including a copy of the first channel (100), and the first PLDev (10, 20) and the second PLDev are the same single PLDev or two separate PLDevs; copying the first channel to the auxiliary channel (100a), when the first safety function (101) and the second safety function (102) in the first channel (100) are in operation; connecting the first safety function (101a) copied in the auxiliary channel (100a) to the industrial system; conducting the maintenance work using the first safety function (101a) copied in the auxiliary channel (100a); disconnecting the first safety function (101a) copied in the auxiliary channel (100a) from the industrial system.

## Description

### Technical Field

The present disclosure relates to maintenance work of a safety application implemented in a programmable logic device, PLDev, for an industrial system.

### Background

In an industrial system, safety applications are implemented for different safety purposes to ensure the safe operation of the industrial system, e.g., a safety purpose for avoiding potential injury of a worker by a cutting machine on a production line, a safety purpose for detecting potential danger caused by spark or smoke generated by a machine on a production line or caused by over temperature on a chemical process in a chemical factory, etc.

An industrial system may include one or a plurality of safety applications, building up one or a plurality of safety functions, each being responsible for a different safety purpose. The one or plurality of safety functions may be implemented in one channel of a single PLDev, e.g., a programmable logic controller (PLC) or Smart I/Os, as a control module in the industrial system, while a PLDev may also include multiple channels depending on the selected safety architecture.

Each of the safety functions may need to be conducted with maintenance work, e.g., testing the safety function, debugging the safety function, modifying the safety function or its parametrization/configuration and then testing and debugging the modified safety function.

Conventionally, for conducting the maintenance work of one of the multiple safety functions implemented in the same channel of a single PLDev, all of the multiple safety functions in the channel are affected since the usual implementation characteristics of a safety function and its related diagnostics in a channel on a PLDev do not allow to change configuration/parametrization/logic or to test/debug the channel without affecting the normal safety related operation of the other safety functions in the channel. Hence, during the maintenance work the Safety Integrity Level, SIL, relating to each of the safety functions in the channel has to be lowered from SIL3 to SILO, i.e., from a very safe level down to a basically non-safe level.

If the whole industrial system has to keep working during the maintenance work, the operator of the industrial system has to define special measures, such as external manual safety operation rules, for all of the safety functions affected by the maintenance work on this safety PLDev, so as to limit hazard to an acceptable level.

Nevertheless, since the safety level relating to each of the affected safety functions is lowered to SILO, the entire safety level of the industrial system during the maintenance work cannot be high.

### Summary

The present invention provides a solution to conduct maintenance work of one safety function without affecting the normal operation of any other safety function implemented in the same channel of a PLDev.

### Brief Description of the Figures

- Fig. 1: A programmable logic device according to example A.
- Fig. 2: A programmable logic device according to example A.
- Fig. 3: A programmable logic device according to example A.
- Fig. 4: A programmable logic device according to example B.
- Fig. 5: A programmable logic device according to example B.
- Fig. 6: A programmable logic device according to example B.
- Fig. 7: A programmable logic device according to example C.

### Detailed Description

### Example A:

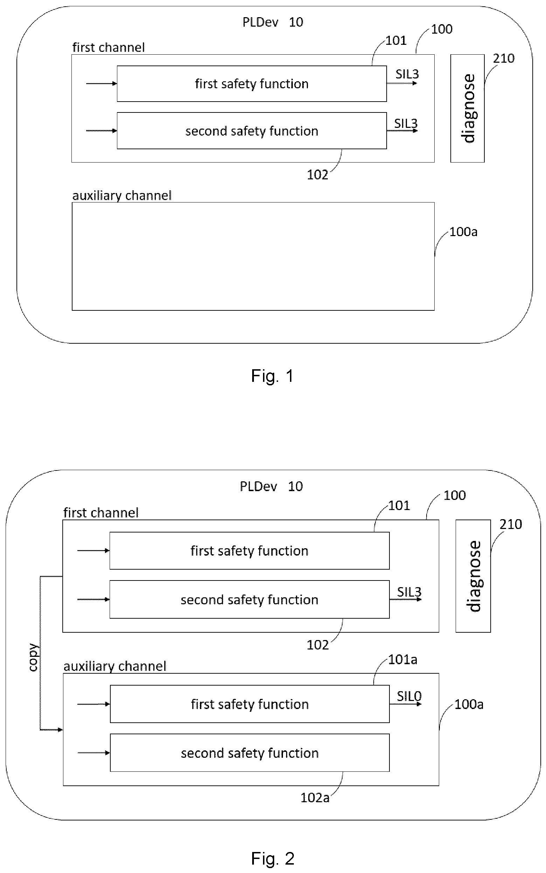

Fig. 1 shows a PLDev 10 as an example, in which a first channel 100 is implemented with a first safety function 101 and a second safety function 102 for an industrial system, each for a different safety purpose of the industrial system. The first channel 100 may include one or more further safety functions for one or more further safety purposes of the industrial system, but not shown in Fig. 1. Further, for the first channel 100 a diagnose function 210 may be provided for detecting failures, such as random hardware failures, in the first channel 100. If any failure is detected, the diagnose function 210 may shut down all the outputs of all the safety functions in the first channel, e.g., through a control signal to instruct each of the safety functions in the first channel 100 to stop outputting, and the diagnose function 210 may output alarm signal to indicate that a failure occurs.

The entire first channel 100 including all the safety functions implemented therein together with the corresponding diagnose function 210 is working during an operation for ensuring the corresponding safety purposes of the industrial system to be on an expected safe level, e.g., SIL3.

As an example, during the operation, if maintenance work is needed for the first safety function 101 but the operation of the industrial system cannot be stopped, it is not possible to conduct the maintenance work of the first safety function 101 without affecting the normal operation of the other safety function(s) in the same channel. That is, if the maintenance work for the first safety function 101 is conducted in the first channel 100, not only the safety level of the first safety function 101 but also the safety level of the second safety function 102 as well as of all the other safety functions in the first channel 100 have to be lowered, e.g., to SIL0. As a result, the safety level of the entire industrial system becomes very low, i.e., non-safe.

Therefore, it is desired to enable conducting maintenance work of the first safety function 101 without impacting any other safety function(s) in the first channel 100, so that only the safety level corresponding to the first safety function 101 is lowered during the operation, which may be compensated by, e.g., an external manual safety regulation at an acceptable safety level, so that the safety of the entire industrial system may still be maintained at an acceptable level during the maintenance work.

To this end, an auxiliary channel 100a may be provided, e.g., in the same PLDev 10 as shown in Fig. 1, which is able to contain all the safety functions in the first channel 100. It is also possible to provide the auxiliary channel 100a in a different PLDev. This auxiliary channel 100a does not need any safety integrity level because the relevant logic under maintenance is executed in non-safe mode anyway. In this respect, it is not needed to provide a diagnose function 210 for this auxiliary channel 100a.

Before the maintenance work during the operation, the first channel 100 as a whole may be copied into the auxiliary channel 100a, as shown in Fig. 2, which can be completed very quickly, e.g., through a block memory copy operation.

Then, the first safety function 101a copied in the auxiliary channel 100a needs to be connected to the industrial system, so as to obtain the input data of the first safety function 101 in the first channel 100, and to send output data to the industrial system for replacing the output data of the first safety function 101 in the first channel 100.

As an example, the input data to the first safety function 101 in the first channel 100 is written into a first memory segment in the PLDev 10, so that the first safety function 101 may read the input data from the first memory segment, process the input data by one or more function blocks inside the first safety function 101, and then output the result of the process as output data. The function blocks in a safety function may be connected in a chain to form a safety chain, but may also be connected in any kind of topologies that can realize the safety purpose of the safety function. The output data may be written into a second memory segment, and then sent to the industrial system for the safety purpose, e.g., being read by or sent to another device in the industrial system that may stop a cutting machine if the output data indicates that a worker is in a dangerous area around the cutting machine. The reading or sending operation of the output data may be activated by an activating signal each time the second memory segment for the output data is updated or modified.

For connecting the first safety function 101a copied in the auxiliary channel 100a to the industrial system, the first safety function 101a copied in the auxiliary channel 100a may be enabled to read the first memory segment for the input data. In this respect, it is preferably to set the first memory segment in a memory area of the PLDev 10 that can be directly addressed by any safety function in the first channel 100 and by any safety function in the auxiliary channel 100a, so that no additional operation is needed for enabling the first safety function 101a copied in the auxiliary channel 100a to read the input data from the first memory segment.

Further, the first safety function 101a copied in the auxiliary channel 100a may be enabled to send output data to the industrial system for replacing the output data of the first safety function 101 in the first channel 100, which may be realized by one of at least three manners.

In the first manner, the first safety function 101 in the first channel 100 still sends output data to the second memory segment as usual, while the first safety function 101a copied in the auxiliary channel 100a may write the output data into the second memory segment with a time delay with respect to the time point at which the first safety function 101 in the first channel 100 writes the output data into the second memory segment, so that the delayed memory writing operation overwrites the content written into the second memory segment before the delay. Thus, the output data from the first safety function 101 in the first channel 100 is replaced so that only the output data from the first safety function 101a in the auxiliary channel 100a is sent to the industrial system during the maintenance work. The time delay may be set as short as possible, so as to avoid a situation that the output data from the first safety function 101 in the first channel 100 is still transmitted to the industrial system before it is overwritten. For example, the first safety function 101 in the first channel 100 starts writing the output data into the second memory segment at a time point of *T,* and the writing operation needs a time duration of *t,* then the first safety function 101a copied in the auxiliary channel 100a may start writing the output data into the second memory segment at time point of *T+t.*

In a second manner, no time delay is needed by the first safety function 101a copied in the auxiliary channel 100a, but the first safety function 101 in the first channel 100 may be stopped writing the output data into the second memory segment, by setting a switching function block before the second memory segment, so that it is possible to disable a data path from the first safety function 101 in the first channel 100 to the second memory segment.

In a third manner, no time delay is needed by the first safety function 101a copied in the auxiliary channel 100a, but the first safety function 101 in the first channel 100 may be stopped writing the output data into the second memory segment, by modifying the corresponding code of the writing operation in the runtime environment, which is part of runtime code outside the executed application code of the first safety function 101 in the first channel 100. In this respect, a runtime environment tool, such as a T3 tool, may be used to trigger during maintenance work to start or stop the execution of the modified code of the corresponding writing operation in the runtime environment.

After the first safety function 101a copied in the auxiliary channel 100a is connected to the industrial system, maintenance work may be conducted for the first safety function 101 but using the first safety application 101a copied in the auxiliary channel 100a, e.g., testing the first safety function 101a, debugging the first safety function 101a, modifying the first safety function 101a and/or its configuration/parametrization and then testing and debugging the modified first safety function 101a. During the maintenance work, the safety level of the first safety function is lowered, e.g., to SILO, and the safety purpose corresponding to the first safety function may be compensated by an external manual safety regulation, e.g., a specific rule for a cooperation between a worker for a cutting machine and a technician for the maintenance work.

At the same time, the second safety function 102 in the first channel 100, as well as any other safety function(s) in the first channel 100, still keeps working as usual, so that the safety levels of the other safety functions can be maintained, e.g., with SIL3. In this respect, the second safety function 102a copied in the auxiliary channel 100a may be modified to stop sending out any output data, so as to avoid any potential impact on the normal operation of the second safety function 102 in the first channel 100.

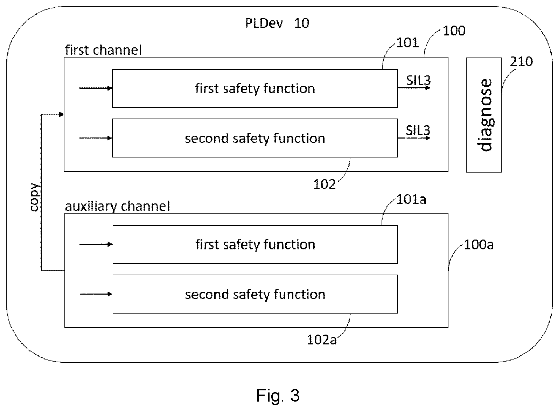

After the maintenance work is finished, if the first safety function 101a in the auxiliary channel 100a has been modified, and the modified version needs to be used for the industrial system, the entire auxiliary channel 100a may be copied back to the first channel 100, so that the modified version may overwrite the original first safety function 101 in the first channel 100, as shown in Fig. 3. This copy operation can be completed very quickly, e.g., by a block memory copy operation, either at the beginning or at the end of an operation cycle of the first channel 100, without affecting the normal operation of the function blocks in each safety function in the first channel. The operation cycle may refer to a time cycle of a channel, during which each of the safety functions (101, 102) in the first channel 100 can complete its work from obtaining the input data, processing the input data, until output the output data. The operation cycle may be set with a time redundancy, so as to ensure that the above-mentioned copy operation can be completed either at the beginning or at the end of the operation cycle without affecting the normal operation of the function blocks in each safety function in the first channel.

If the first safety function 101a copied in the auxiliary channel 100a has been modified to introduce the time delay for writing the output data into the second memory segment, i.e., the first manner as mentioned above, the time delay may be removed from the first function 101a copied in the auxiliary channel 100a before it is copied back to the first channel 100.

If the above-mentioned second manner has been taken by setting a switching function block before the second memory segment for the output data, the switching function block may be set to enable the data path from the first safety function 101 in the first channel 100 to the second memory segment, which can be done either immediately before or immediately after the modified first function 101a is copied back to the first channel 100. Further, the first safety function 101a copied in the auxiliary channel 100a may be stopped writing its output data into the second memory segment, which can be done either by revising the writing operation or by removing the entire first safety function 101a copied in the auxiliary channel 100a.

If the third manner has been taken, the execution of the modified code of the corresponding writing operation in the runtime environment may be stopped by the runtime environment tool. Further, the first safety function 101a copied in the auxiliary channel 100a may be stopped writing its output data into the second memory segment, which can be done either by revising the writing operation or by removing the entire first safety function 101a copied in the auxiliary channel 100a.

However, after the maintenance work is finished, if the first safety function 101 in the first channel 100 does not need to be updated, the content in the auxiliary channel 100a may be removed as whole, e.g., by a block memory clearance operation, or can be maintained but together with an operation of stopping the output of the first safety application 101a copied in the auxiliary channel 100a, while the maintained content may be overwritten in the next maintenance work by copying the first channel 100 or any other channel in the PLDev 10. Nevertheless, the output of the first safety application 101 in the first channel 100 needs to be recovered. In this respect, no operation is needed if the above-mentioned first manner with a time delay has been used, while for the second manner as mentioned above the switching function block may be set to enable the data path from the first safety function 101 in the first channel 100 to the second memory segment, which can be done either immediately before or immediately after the modified first function 101a is copied back to the first channel 100, and for the third manner as mentioned above the execution of the modified code of the corresponding writing operation in the runtime environment may be stopped by the runtime environment tool.

### Example B:

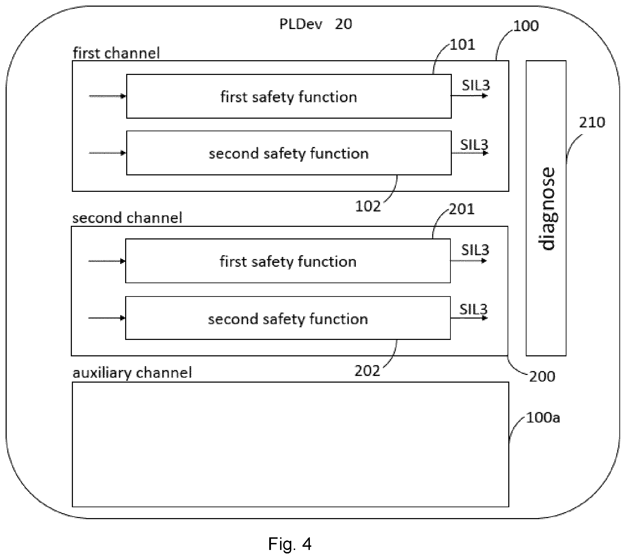

In a further example, a PLDev 20 as shown in Fig. 4 may include a first channel 100 with a first safety function 101 and a second safety function 102 implemented therein. Further, the first channel 100 may include one or more other safety functions. This PLDev 20 may include a second channel 200, which is a copy of the first channel. That is, the first safety function 201 in the second channel 200 is the same as the first safety function 101 in the second channel 100, and the second safety function 202 in the second channel 200 is the same as the second safety function 102 in the second channel 100. If the first channel 100 further includes one or more safety functions, the second channel 200 also further includes one or more the same safety functions.

In such a dual configuration, the input data for a safety function is input to the same safety function in each of the first channel 100 and the second channel 200, and each of the same safety function processes the input data in the same manner and thus should output the same output data. The two output data from the two same safety functions will be cross compared by a diagnose function block 210 to check if they are the same. If they are the same, the diagnose function block 210 allows to send the output data to the industrial system for the corresponding safety purpose, e.g., by sending a control signal to the corresponding safety function in the first channel 100 or in the second channel 200 to instruct it to output the output data. However, if the two output data are not the same, the diagnose function block 210 may generate an alarm signal to indicate that at least one of the two same safety functions has a malfunction, which may be caused, e.g., due to aging of the a hardware circuit in the PLDev for implementing the safety function. Such a dual configuration for a safety function may avoid a risk caused by the malfunction. In this respect, the diagnose function 210, compared to that in Figs. 1 to 3, is responsible for failure detection of the first channel 100 and the second channel 200, and has an additional function of cross comparing the output data from the same safety functions in first channel 100 and the second channel 200.

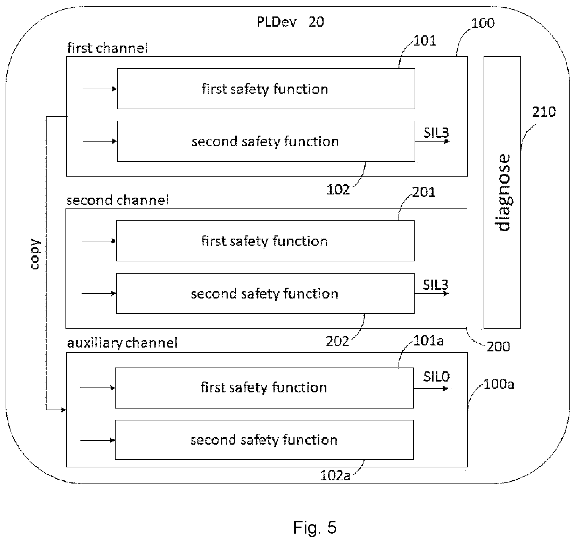

If maintenance work is to be conducted, e.g., for the first safety function 101 and 201, an auxiliary channel 100a is provided, e.g., in the same PLDev 20. During the operation, the first channel 100 may be copied to the auxiliary channel 100a as shown in Fig. 5, which is basically the same as the copying operation shown in Fig. 2. Then, the auxiliary channel 100a needs to be connected to the industrial system, so as to obtain the input data to the first safety function 101 and 201, and to send output data to the industrial system for replacing the output data of the first safety function 101 and 201.

For the input data, the principle is the same as the example shown Fig. 2. That is, the first safety function 101a copied in the auxiliary channel 100a may read the input data from the first memory segment.

For the output data, the principle is similar to the first to third manners as mentioned above. A difference lies in that each of first safety functions 101 and 201 may have an output memory segments, and the diagnose function block 210 reads the output data from each of the output memory segments for the check, and if the check confirms identical output data, the output data in one of the output memory segments may be allowed by the diagnose function 210 to be sent to or read by the industrial system for the safety purpose.

Hence, in the first manner, the output data from the first safety function 101a copied in the auxiliary channel 100a may be written with a time delay into each of the output memory segments.

In the second manner, the output from each of the first safety functions 101 and 201 may be stopped by setting a switching function block before each of the output memory segments, while the output data from the first safety function 101a copied in the auxiliary channel 100a may be written without any time delay into each of the output memory segments.

In the third manner, the output from each of the first safety functions 101 and 201 may be stopped by modifying the corresponding code of the writing operation in the runtime environment.

After the first safety function 101a copied in the auxiliary channel 100 is connected to the industrial system, maintenance work may be conducted for the first safety function 101 and 201 but using the first safety function 101a copied in the auxiliary channel 100a, e.g., testing the first safety function, debugging the first safety function, modifying the first safety function and then testing and debugging the modified first safety function. During the maintenance work, the safety level of the first safety function is lowered, e.g., to SILO, and the safety level corresponding to the first safety function may be compensated by an external manual safety regulation, e.g., a specific rule for a cooperation between a worker for a cutting machine and a technician for the maintenance work.

At the same time, the second safety functions 102 and 202 in the first channel 100 and the second channel 200, as well as any other safety function(s) therein, still keep working as usual, so that the safety levels of the other safety functions can be maintained, e.g., with SIL3. In this respect, the second safety function 102a copied in the auxiliary channel 100a may be modified to stop sending out any output data, so as to avoid any potential impact on the normal operation of the second safety functions 102 and 202.

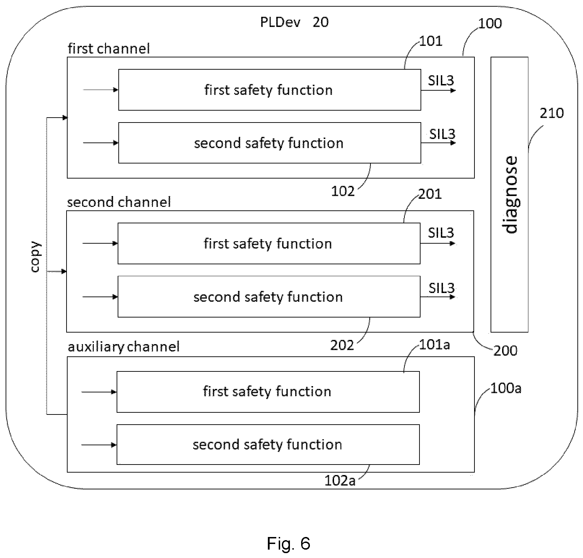

After the maintenance work is finished, if the first safety function 101a in the auxiliary channel 100a has been modified, and the modified version needs to be used for the industrial system, the entire auxiliary channel 100a may be copied back to the first channel 100 and copied back to the second channel 200, so that the modified version may be copied back to the first channel 100 and the second channel 200 to overwrite the original first safety functions 101 and 201, as shown in Fig. 6. This copy operation can be completed very quickly, e.g., by block memory copying operations, either at the beginning or at the end of an operation cycle of the first channel 100 and of the second channel 200, without affecting the normal operation of the function blocks in the first channel 100 and the second channel 200.

If the first safety function 101a copied in the auxiliary channel 100a has been modified to introduce the time delay, i.e., the first manner as mentioned above, the time delay should be removed from the first application 101a copied in the auxiliary channel 100a before it is copied back to the first channel 100 and the second channel 200.

If the second manner has been taken by setting a switching function block before each output memory segment, the switching function block may be set to enable the data path to the output memory segment, which can be done either immediately before or immediately after the modified first function 101a is copied back. Further, the first safety function 101a copied in the auxiliary channel 100a may be stopped writing its output data into each output memory segment, which can be done either by revising the writing operation or by removing the entire first safety function 101a copied in the auxiliary channel 100a.

If the third manner has been taken, the execution of the modified code of the corresponding writing operation in the runtime environment may be stopped by the runtime environment tool.

However, after the maintenance work is finished, if the first safety function 101 in the first channel 100 does not need to be updated, the content in the auxiliary channel 100a may be removed as whole, e.g., by a block memory clearance operation, or can be maintained but together with an operation of stopping the output of the first safety function 101a copied in the auxiliary channel 100a, while the maintained content may be overwritten in the next maintenance work by copying the first channel 100 or any other channel in the PLDev 20. Nevertheless, the outputs of the first safety functions 101 and 201 in the first channel 100 and the second channel 200 need to be recovered. In this respect, no operation is needed if the first manner with a time delay has been used, while for the second manner as mentioned above the corresponding switching function block may be set to enable the data path to each output memory segment, which can be done either immediately before or immediately after the modified first function 101a is copied back to the first channel 100 and the second channel 200, and for the third manner as mentioned above the execution of the modified code of the corresponding writing operation in the runtime environment may be stopped by the runtime environment tool.

### Example C:

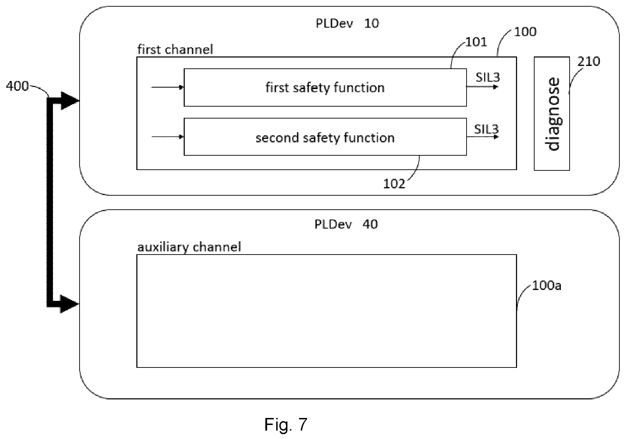

As shown in Fig. 7, the auxiliary channel 100a may be provided in a separate PLDev 40 which is different from the PLDev 10 as shown in Fig. 1. In this example, a communication path 400 may be provided for the communication between the PLDev 10 and the PLDev 40 to enable all the necessary communications needed in the steps discussed above, including copying the first channel 101 into the auxiliary channel 100a, connecting the first safety function 101a copied in the auxiliary channel 100a to the industrial system, conducting the maintenance work using the first safety function 101a copied in the auxiliary channel 100a, disconnecting the first safety function 101a copied in the auxiliary channel 100a from the industrial system, overwriting the first channel 100 by copying the auxiliary channel 100a to the first channel 100.

Similarly, a separate PLDev with an auxiliary channel 100a may also be provided for the first channel 100 and the second channel 200 in the PLDev 20 as shown in Fig. 4, for which a communication path is provided for the communication between the PLDev 10 and the separate PLDev to enable all the necessary communications needed in the steps discussed above, including copying the first channel 100 into the auxiliary channel 100a, connecting the first safety function 101a copied in the auxiliary channel 100a to the industrial system, conducting the maintenance work using the first safety function 101a copied in the auxiliary channel 100a, disconnecting the first safety function 101a copied in the auxiliary channel 100a from the industrial system, overwriting the first channel 100 by copying the auxiliary channel 100a to the first channel 100.

Providing the auxiliary channel 100a in a separate PLDev may save hardware resource, since no auxiliary channel needs to be reserved in the PLDev that includes the safety function 101 to be carried out with maintenance work.

While the invention has been described with reference to the above examples, it is to be understood that the description is for illustration purposes only. Accordingly, it is intended that the invention be limited only by the scope of the claims appended hereto.

### Further examples:

Example 1. A method for maintenance work of a first safety function (101) implemented in a first channel (100) in a first programmable logic device(10, 20), PLDev, for an industrial system, wherein a second safety function (102) is implemented in the first channel (100), and the first safety function (101) is applied for a first safety purpose of the industrial system and the second safety function (102) is applied for a second safety purpose of the industrial system, the method comprising:
providing an auxiliary channel (100a) in a second PLDev, wherein the auxiliary channel (100a) is capable of including a copy of the first channel (100), and the first PLDev (10, 20) and the second PLDev are the same single PLDev or two separate PLDevs;
copying the first channel to the auxiliary channel (100a), when the first safety function (101) and the second safety function (102) in the first channel (100) are in operation;
connecting the first safety function (101a) copied in the auxiliary channel (100a) to the industrial system;
conducting the maintenance work using the first safety function (101a) copied in the auxiliary channel (100a);
disconnecting the first safety function (101a) copied in the auxiliary channel (100a) from the industrial system.

Example 2. The method of example 1, further comprising:
overwriting the first channel (100) by copying the auxiliary channel (100a) to the first channel (100), if the first safety function (101a) copied in the auxiliary channel (100a) is modified during the maintenance work and the modified first safety function is to be implemented as a new version of the first safety function for the industrial system.

Example 3. The method of example 1 or 2, wherein the step of connecting the first safety function (101a) copied in the auxiliary channel (100a) to the industrial system comprises:
enabling the first safety function (101a) copied in the auxiliary channel (100a) to obtain input data to the first safety function (101) in the first channel (100); and enabling the first safety function (101a) copied in the auxiliary channel (100a) to send output data to the industrial system for replacing the output data of the first safety function (101) in the first channel (100).

Example 4. The method of example 3, wherein the step of connecting the first safety function (101a) copied in the auxiliary channel (100a) to the industrial system comprises further comprises:
disenabling the second safety function (102a) copied in the auxiliary channel (100a) to send output data to the industrial system.

Example 5. The method of example 3 or 4, wherein the input data to the first safety function (101) in the first channel (100) is written into a first memory segment in the first PLDev (100), and the step of enabling the first safety function (101a) copied in the auxiliary channel (100a) to obtain input data to the first safety function (101) in the first channel (100) comprises:
enabling the first safety function (101a) copied in the auxiliary channel (100a) to read the input data from the first memory segment.

Example 6. The method of any one of examples 3 to 5, wherein the output data of the first safety function (101) in the first channel (100) is written into a second memory segment in the first PLDev (10, 20), and the step of enabling the first safety function (101a) copied in the auxiliary channel (100a) to send output data to the industrial system for replacing the output data of the first safety function (101) in the first channel (100) comprises:
enabling the first safety function (101a) copied in the auxiliary channel (100a) to write the output data into the second memory segment with a time delay with respect to a time point at which the first safety function (101) in the first channel (100) writes the output data into the second memory segment.

Example 7. The method of example 6, wherein the step of disconnecting the first safety function (101a) copied in the auxiliary channel (100a) from the industrial system comprises:
stopping writing the output data into the second memory segment by the first safety function (101a) copied in the auxiliary channel (100a).

Example 8. The method of any one of examples 3 to 5, wherein the output data of the first safety function (101) in the first channel (100) is written into a second memory segment in the first PLDev (10, 20), and the step of enabling the first safety function (101a) copied in the auxiliary channel (100a) to send output data to the industrial system for replacing the output data of the first safety function (101) in the first channel (100) comprises:
enabling the first safety function (101a) copied in the auxiliary channel (100a) to write the output data into the second memory segment;
disenabling the first safety function (101) in the first channel (100) to write the output data into the second memory segment.

Example 9. The method of example 8, wherein the step of disconnecting the first safety function (101a) copied in the auxiliary channel (100a) from the industrial system comprises:
stopping writing the output data into the second memory segment by the first safety function (101a) copied in the auxiliary channel (100a); and
enabling the first safety function (101) in the first channel (100) to write the output data into the second memory segment.

Example 10. The method of any one of examples 2 to 9, wherein the first PLDev (1) further includes a second channel (200) as a copy of the first channel (100), and a diagnose function block (210), wherein each safety function in the first channel (100) and the corresponding safety function in the second channel (200) process the same input data in the same manner, and if the diagnose function block (210) judges that the output data from the two copies of the same safety function are identical, the diagnose function block (210) allows to send the output data to the industrial system,
wherein the step of overwriting further comprises overwriting the second channel (100) by copying the auxiliary channel (100a) to the second channel (200).

Example 11. The method of any one of the preceding examples, wherein
when the first PLDev (10, 20) and the second PLDev are the same single PLDev, the step of providing an auxiliary channel (100a) in the second PLDev comprises: reserving the auxiliary channel (100a) in the first PLDev (10, 20);
when the first PLDev (10) and the second PLDev (40) are two separate PLDevs, the step of providing an auxiliary channel (100a) in the second PLDev (40) comprises: providing a separate PLDev (40) as the second PLDev (40) in which an auxiliary channel (100a) is reserved; and providing, between the second PLDev (40) and the first PLDev (10), a communication path (400) that supports the communication needed by the copying step, the connecting step, the conducting step, the disconnecting step, and the overwriting step.

Example 12. The method of any one of the preceding examples, wherein the maintenance work of the first safety function including at least one of the followings:
testing a function of the safety function;
   debugging the first safety function;
modifying the first safety function, and testing and debugging the modified first safety function.

Example 13. A programmable logic device, PLDev, adapted for an industrial system, comprising:
a first channel (100), including a first safety function (101) for a first safety purpose of the industrial system and a second safety function (102) for a second safety purpose of the industrial system; and
an auxiliary channel (100a), adapted to be capable of including a copy of the first channel (100);
wherein the PLDev is adapted to be able to copy the entire first channel (100) into the auxiliary channel (100a).

Example 14. The PLDev of example 13, comprising:
a first memory segment, adapted for storing the input data of the first safety function (101),
wherein the first memory segment is adapted to be readable by the first safety function (101) in the first channel (100) and is adapted to be readable by the first safety function (101a) copied in the auxiliary channel (100a) after the entire first channel (100) is copied into the auxiliary channel (100a).

Example 15. The PLDev of example 13 or 14, comprising:
a second memory segment, adapted for storing the output data of the first safety function (101),
wherein the second memory segment is adapted to be writable by the first safety function (101) in the first channel (100) and is adapted to be writable by the first safety function (101a) copied in the auxiliary channel (100a) after the entire first channel (100) is copied into the auxiliary channel (100a).

Example 16. The PLDev of example 15, comprising:
a switching function block, adapted for enabling or disabling the first safety function (101) in the first channel (100) to write the output data of the first safety function (101) into the second memory segment.

## Claims

1. A method for maintenance work of a first safety function (101) implemented in a first channel (100) in a first programmable logic device(10, 20), PLDev, for an industrial system, wherein a second safety function (102) is implemented in the first channel (100), and the first safety function (101) is applied for a first safety purpose of the industrial system and the second safety function (102) is applied for a second safety purpose of the industrial system, the method comprising:
providing an auxiliary channel (100a) in a second PLDev, wherein the auxiliary channel (100a) is capable of including a copy of the first channel (100), and the first PLDev (10, 20) and the second PLDev are the same single PLDev or two separate PLDevs;
copying the first channel to the auxiliary channel (100a), when the first safety function (101) and the second safety function (102) in the first channel (100) are in operation;
connecting the first safety function (101a) copied in the auxiliary channel (100a) to the industrial system;
conducting the maintenance work using the first safety function (101a) copied in the auxiliary channel (100a);
disconnecting the first safety function (101a) copied in the auxiliary channel (100a) from the industrial system.

2. The method of claim 1, further comprising:
overwriting the first channel (100) by copying the auxiliary channel (100a) to the first channel (100), if the first safety function (101a) copied in the auxiliary channel (100a) is modified during the maintenance work and the modified first safety function is to be implemented as a new version of the first safety function for the industrial system.

3. The method of claim 1 or 2, wherein the step of connecting the first safety function (101a) copied in the auxiliary channel (100a) to the industrial system comprises:
enabling the first safety function (101a) copied in the auxiliary channel (100a) to obtain input data to the first safety function (101) in the first channel (100); and
enabling the first safety function (101a) copied in the auxiliary channel (100a) to send output data to the industrial system for replacing the output data of the first safety function (101) in the first channel (100).

4. The method of claim 3, wherein the step of connecting the first safety function (101a) copied in the auxiliary channel (100a) to the industrial system comprises further comprises:
disabling the second safety function (102a) copied in the auxiliary channel (100a) to send output data to the industrial system.

5. The method of claim 3 or 4, wherein the input data to the first safety function (101) in the first channel (100) is written into a first memory segment in the first PLDev (100), and the step of enabling the first safety function (101a) copied in the auxiliary channel (100a) to obtain input data to the first safety function (101) in the first channel (100) comprises:
enabling the first safety function (101a) copied in the auxiliary channel (100a) to read the input data from the first memory segment.

6. The method of any one of claims 3 to 5, wherein the output data of the first safety function (101) in the first channel (100) is written into a second memory segment in the first PLDev (10, 20), and the step of enabling the first safety function (101a) copied in the auxiliary channel (100a) to send output data to the industrial system for replacing the output data of the first safety function (101) in the first channel (100) comprises:
enabling the first safety function (101a) copied in the auxiliary channel (100a) to write the output data into the second memory segment with a time delay with respect to a time point at which the first safety function (101) in the first channel (100) writes the output data into the second memory segment.

7. The method of claim 6, wherein the step of disconnecting the first safety function (101a) copied in the auxiliary channel (100a) from the industrial system comprises:
stopping writing the output data into the second memory segment by the first safety function (101a) copied in the auxiliary channel (100a).

8. The method of any one of claims 3 to 5, wherein the output data of the first safety function (101) in the first channel (100) is written into a second memory segment in the first PLDev (10, 20), and the step of enabling the first safety function (101a) copied in the auxiliary channel (100a) to send output data to the industrial system for replacing the output data of the first safety function (101) in the first channel (100) comprises:
enabling the first safety function (101a) copied in the auxiliary channel (100a) to write the output data into the second memory segment;
disabling the first safety function (101) in the first channel (100) to write the output data into the second memory segment.

9. The method of claim 8, wherein the step of disconnecting the first safety function (101a) copied in the auxiliary channel (100a) from the industrial system comprises:
stopping writing the output data into the second memory segment by the first safety function (101a) copied in the auxiliary channel (100a); and
enabling the first safety function (101) in the first channel (100) to write the output data into the second memory segment.

10. The method of any one of claims 2 to 9, wherein the first PLDev (1) further includes a second channel (200) as a copy of the first channel (100), and a diagnose function block (210), wherein each safety function in the first channel (100) and the corresponding safety function in the second channel (200) process the same input data in the same manner, and if the diagnose function block (210) judges that the output data from the two copies of the same safety function are identical, the diagnose function block (210) allows to send the output data to the industrial system,
wherein the step of overwriting further comprises overwriting the second channel (200) by copying the auxiliary channel (100a) to the second channel (200).

11. The method of any one of the preceding claims, wherein
when the first PLDev (10, 20) and the second PLDev are the same single PLDev, the step of providing an auxiliary channel (100a) in the second PLDev comprises: reserving the auxiliary channel (100a) in the first PLDev (10, 20);
when the first PLDev (10) and the second PLDev (40) are two separate PLDevs, the step of providing an auxiliary channel (100a) in the second PLDev (40) comprises: providing a separate PLDev (40) as the second PLDev (40) in which an auxiliary channel (100a) is reserved; and providing, between the second PLDev (40) and the first PLDev (10), a communication path (400) that supports the communication needed by the copying step, the connecting step, the conducting step, the disconnecting step, and the overwriting step.

12. The method of any one of the preceding claims, wherein the maintenance work of the first safety function including at least one of the followings:
testing a function of the safety function;
debugging the first safety function;
modifying the first safety function, and testing and debugging the modified first safety function.

13. A programmable logic device, PLDev, adapted for an industrial system, comprising:
a first channel (100), including a first safety function (101) for a first safety purpose of the industrial system and a second safety function (102) for a second safety purpose of the industrial system; and
an auxiliary channel (100a), adapted to be capable of including a copy of the first channel (100);
wherein the PLDev is adapted to be able to copy the entire first channel (100) into the auxiliary channel (100a).

14. The PLDev of claim 13, comprising:
a first memory segment, adapted for storing the input data of the first safety function (101),
wherein the first memory segment is adapted to be readable by the first safety function (101) in the first channel (100) and is adapted to be readable by the first safety function (101a) copied in the auxiliary channel (100a) after the entire first channel (100) is copied into the auxiliary channel (100a).

15. The PLDev of claim 13 or 14, comprising:
a second memory segment, adapted for storing the output data of the first safety function (101),
wherein the second memory segment is adapted to be writable by the first safety function (101) in the first channel (100) and is adapted to be writable by the first safety function (101a) copied in the auxiliary channel (100a) after the entire first channel (100) is copied into the auxiliary channel (100a);
the PLDev preferably further comprises:
a switching function block, adapted for enabling or disabling the first safety function (101) in the first channel (100) to write the output data of the first safety function (101) into the second memory segment.

## Amended claims

### Amended claims in accordance with Rule 137(2) EPC.

1. A method for maintenance work of a first safety function (101) implemented in a first channel (100) in a first programmable logic device (10, 20), PLDev, for an industrial system, wherein a second safety function (102) is implemented in the first channel (100), and the first safety function (101) is applied for a first safety purpose of the industrial system and the second safety function (102) is applied for a second safety purpose of the industrial system, wherein a channel in a PLDev has an operation cycle during which each safety function in the channel can complete its work from obtaining input data, processing the input data, until output the output data, the method comprising:
providing an auxiliary channel (100a) in a second PLDev, wherein the auxiliary channel (100a) is capable of including a copy of the first channel (100), and the first PLDev (10, 20) and the second PLDev are the same single PLDev or two separate PLDevs;
copying the first channel to the auxiliary channel (100a), when the first safety function (101) and the second safety function (102) in the first channel (100) are in operation;
connecting the first safety function (101a) copied in the auxiliary channel (100a) to the industrial system;
disabling the second safety function (102a) copied in the auxiliary channel (100a) to send output data to the industrial system;
keeping the second safety function (102) in the first channel (100) working as usual;
conducting the maintenance work using the first safety function (101a) copied in the auxiliary channel (100a);
disconnecting the first safety function (101a) copied in the auxiliary channel (100a) from the industrial system.

2. The method of claim 1, further comprising:
overwriting the first channel (100) by copying the auxiliary channel (100a) to the first channel (100), if the first safety function (101a) copied in the auxiliary channel (100a) is modified during the maintenance work and the modified first safety function is to be implemented as a new version of the first safety function for the industrial system.

3. The method of claim 1 or 2, wherein the step of connecting the first safety function (101a) copied in the auxiliary channel (100a) to the industrial system comprises:
enabling the first safety function (101a) copied in the auxiliary channel (100a) to obtain input data to the first safety function (101) in the first channel (100); and
enabling the first safety function (101a) copied in the auxiliary channel (100a) to send output data to the industrial system for replacing the output data of the first safety function (101) in the first channel (100).

4. The method of claim 3, wherein the input data to the first safety function (101) in the first channel (100) is written into a first memory segment in the first PLDev (100), and the step of enabling the first safety function (101a) copied in the auxiliary channel (100a) to obtain input data to the first safety function (101) in the first channel (100) comprises:
enabling the first safety function (101a) copied in the auxiliary channel (100a) to read the input data from the first memory segment.

5. The method of any one of claims 3 to 4, wherein the output data of the first safety function (101) in the first channel (100) is written into a second memory segment in the first PLDev (10, 20), and the step of enabling the first safety function (101a) copied in the auxiliary channel (100a) to send output data to the industrial system for replacing the output data of the first safety function (101) in the first channel (100) comprises:
enabling the first safety function (101a) copied in the auxiliary channel (100a) to write the output data into the second memory segment with a time delay with respect to a time point at which the first safety function (101) in the first channel (100) writes the output data into the second memory segment.

6. The method of claim 5, wherein the step of disconnecting the first safety function (101a) copied in the auxiliary channel (100a) from the industrial system comprises:
stopping writing the output data into the second memory segment by the first safety function (101a) copied in the auxiliary channel (100a).

7. The method of any one of claims 3 to 4, wherein the output data of the first safety function (101) in the first channel (100) is written into a second memory segment in the first PLDev (10, 20), and the step of enabling the first safety function (101a) copied in the auxiliary channel (100a) to send output data to the industrial system for replacing the output data of the first safety function (101) in the first channel (100) comprises:
enabling the first safety function (101a) copied in the auxiliary channel (100a) to write the output data into the second memory segment;
disabling the first safety function (101) in the first channel (100) to write the output data into the second memory segment.

8. The method of claim 7, wherein the step of disconnecting the first safety function (101a) copied in the auxiliary channel (100a) from the industrial system comprises:
stopping writing the output data into the second memory segment by the first safety function (101a) copied in the auxiliary channel (100a); and
enabling the first safety function (101) in the first channel (100) to write the output data into the second memory segment.

9. The method of any one of claims 2 to 8, wherein the first PLDev (1) further includes a second channel (200) as a copy of the first channel (100), and a diagnose function block (210), wherein each safety function in the first channel (100) and the corresponding safety function in the second channel (200) process the same input data in the same manner, and if the diagnose function block (210) judges that the output data from the two copies of the same safety function are identical, the diagnose function block (210) allows to send the output data to the industrial system,
wherein the step of overwriting further comprises overwriting the second channel (200) by copying the auxiliary channel (100a) to the second channel (200).

10. The method of any one of the preceding claims, wherein
when the first PLDev (10, 20) and the second PLDev are the same single PLDev, the step of providing an auxiliary channel (100a) in the second PLDev comprises: reserving the auxiliary channel (100a) in the first PLDev (10, 20);
when the first PLDev (10) and the second PLDev (40) are two separate PLDevs, the step of providing an auxiliary channel (100a) in the second PLDev (40) comprises: providing a separate PLDev (40) as the second PLDev (40) in which an auxiliary channel (100a) is reserved; and providing, between the second PLDev (40) and the first PLDev (10), a communication path (400) that supports the communication needed by the copying step, the connecting step, the conducting step, the disconnecting step, and the overwriting step.

11. The method of any one of the preceding claims, wherein the maintenance work of the first safety function including at least one of the followings:
testing a function of the safety function;
debugging the first safety function;
modifying the first safety function, and testing and debugging the modified first safety function.

12. A programmable logic device, PLDev, adapted for an industrial system, comprising:
a first channel (100), including a first safety function (101) for a first safety purpose of the industrial system and a second safety function (102) for a second safety purpose of the industrial system, wherein a channel in a PLDev has an operation cycle during which each safety function in the channel can complete its work from obtaining input data, processing the input data, until output the output data; and
an auxiliary channel (100a), adapted to be capable of including a copy of the first channel (100),
wherein the PLDev is adapted to be able to
copy the entire first channel (100) into the auxiliary channel (100a);
connect the first safety function (101a) copied in the auxiliary channel (100a) to the industrial system;
disable the second safety function (102a) copied in the auxiliary channel (100a) to send output data to the industrial system;
keep the second safety function (102) in the first channel (100) working as usual;
enable maintenance work using the first safety function (101a) copied in the auxiliary channel (100a);
disconnect the first safety function (101a) copied in the auxiliary channel (100a) from the industrial system.

13. The PLDev of claim 12, comprising:
a first memory segment, adapted for storing the input data of the first safety function (101),
wherein the first memory segment is adapted to be readable by the first safety function (101) in the first channel (100) and is adapted to be readable by the first safety function (101a) copied in the auxiliary channel (100a) after the entire first channel (100) is copied into the auxiliary channel (100a).

14. The PLDev of claim 12 or 13, comprising:
a second memory segment, adapted for storing the output data of the first safety function (101),
wherein the second memory segment is adapted to be writable by the first safety function (101) in the first channel (100) and is adapted to be writable by the first safety function (101a) copied in the auxiliary channel (100a) after the entire first channel (100) is copied into the auxiliary channel (100a);
the PLDev preferably further comprises:
a switching function block, adapted for enabling or disabling the first safety function (101) in the first channel (100) to write the output data of the first safety function (101) into the second memory segment.
